# EUROPÄISCHE PATENTSCHRIFT

(11) **EP 1 430 685 B1**
(45) Veröffentlichungstag und Bekanntmachung des Hinweises auf die Patenterteilung: **07.06.2006**
(21) Anmeldenummer: 02769937.0
(22) Anmeldetag: 10.09.2002
(51) Int. Cl.: H04L 29/06

(54) **VERFAHREN ZUR ÜBERTRAGUNG VON DATEN IN EINEM PAKETORIENTIERTEN DATENNETZ**
METHOD FOR THE TRANSMISSION OF DATA IN A PACKET-ORIENTED DATA NETWORK
PROCEDE DE TRANSMISSION DE DONNEES DANS UN RESEAU DE DONNEES ORIENTE PAQUET

(30) Priorität: 25.09.2001 DE 10147146
(43) Veröffentlichungstag der Anmeldung: 23.06.2004
(73) Patentinhaber: SIEMENS AKTIENGESELLSCHAFT, 80333 München (DE)
(72) Erfinder: VOLKMANN, Gerald, 81825 München (DE); TOTZKE, Jürgen, 85586 Poing (DE); KLAGHOFER, Karl, 81373 München (DE); MÜLLER, Harald, 82205 Gilching (DE)
(86) Internationale Anmeldenummer: PCT/DE2002/003356
(87) Internationale Veröffentlichungsnummer: WO 2003/028335

(56) Entgegenhaltungen:
- US-A- 5 958 015
- CHRISTOPH RENSING ET AL: "VDMFA, eine verteilte dynamische Firewallarchitektur fuer Multimedia-Dienste" -, 31. März 1999 (1999-03-31), XP002184608
- DONNEMILLER C: "IP LERNT DAZU" NACHRICHTENTECHNIK ELEKTRONIK, VEB VERLAG TECHNIK. BERLIN, DE, Bd. 49, Nr. 7/8, August 1999 (1999-08), Seiten 30-31, XP000849240 ISSN: 0323-4657

## Beschreibung

Verfahren zur Übertragung von Daten in einem paketorientierten Datennetz

Die Erfindung betrifft ein Verfahren zur paketorientierten Übertragung von Daten zwischen mindestens zwei Kommunikationseinrichtungen, gemäß dem Oberbegriff des Patentanspruchs 1 sowie eine Proxy.

Kommunikationsverbindungen zur Übertragung von Sprache werden bisher überwiegend verbindungsorientiert aufgebaut. Hierzu ist für eine Signalübertragung zwischen zwei Kommunikationsendpunkten ausschließlich eine physikalische Verbindung vorgesehen, die für die gesamte Zeit der Verbindung reserviert ist. Dies wird auch als leitungsorientierte Übertragung, statisches Routing (Circuit-Switching) oder Durchschaltvermittlung bezeichnet.

Mit dem Aufkommen paketorientierter Datennetze (Packet-Switching), wie beispielsweise dem Internet, wird im Festnetzbereich eine im Vergleich zur verbindungsorientierten Telekommunikation kostenreduzierte Kommunikation angeboten. Dies liegt insbesondere an der effizienten Kapazitätsauslastung einer Verbindung, da im Gegensatz zum Circuit-Switching das Packet-Switching nicht für die gesamte Dauer der Verbindung das physikalische Übertragungsmedium belegt. Die zu transportierenden Daten werden in einzelne Datenpakete aufgeteilt, wobei jedes Datenpaket einen Adreßcode erhält, der den Empfänger der Übertragung kennzeichnet. Die einzelnen Datenpakete werden dann unabhängig voneinander übertragen - dabei können sie sogar verschiedene Übertragungswege nutzen. Das Prinzip des Packet-Switching ist in verschiedenen Standards definiert, der bekannteste Standard ist in der ITU-T Empfehlung X.25 beschrieben.

Als paketorientierte Übertragungsverfahren für Sprache sind beispielsweise VoFR (Voice over Frame Relay) oder VoIP (Voice over IP) bekannt. Hierbei werden Sprachdaten digitalisiert, einer Quellenkodierung und vorzugsweise einer Kanalkodierung unterzogen und auf Datenpakete aufgeteilt, die dann über das Internet übermittelt werden. Bei den zu übertragenden Daten kann es sich um Daten handeln, die aus Sprach- und/oder Videodaten und aus Informationsdaten zusammengesetzt sind und beispielsweise zur Übertragung von Videokonferenzen über das Internet dienen.

Um die Übertragung von Sprach- und/oder Videodaten und Informationsdaten im Rahmen einer Multimedia-Konferenz über das Internet zu ermöglichen, wurden internationale Standards geschaffen. Zu diesen Standards zählen der H.323 oder der SIP-Standard, die die aus dem Internet bekannten Protokolle, wie UDP (User Data Protocol) und RTP (Real-Time Protocol) nutzen.

Im zunehmenden Maße werden Sicherheitseinrichtungen zum Schutz gegen unberechtigte Zugriffe auf Kommunikationseinrichtungen vorgesehen. Hierbei handelt es sich um Einrichtungen, die einen unerlaubten Zugriff auf Daten verhindern oder erschweren und/oder einen Empfang von Computerviren verhindern, indem Daten die Computerviren enthalten herausgefiltert werden. Diese Sicherheitseinrichtungen werden häufig auch als Firewall bezeichnet. Eine Firewall wird dabei an einer Stelle des Datennetzes eingerichtet, an der ein geschütztes internes Netz, beispielsweise Intranet, an das Internet anknüpft. Alle aus dem Internet eintreffenden oder vom internen Netz ausgehenden Informationen und Daten passieren die Firewall. Dies bietet der Firewall die Möglichkeit sicherzustellen, daß dieser Datenverkehr zulässig ist, d.h. der Sicherheitspolitik des jeweiligen Standorts entspricht. Eine Firewall entspricht somit einem Kontrollpunkt, den der gesamte ein- und ausgehende Datenverkehr passieren muß. Die Bündelung der Sicherheitsmaßnahmen auf diesen einen Kontrollpunkt ist wesentlich effizienter, als die sicherheitsrelevanten Entscheidungen und Technologien über die ganze Organisation zu verteilen und alle Schwachstellen stückweise abzudecken.

Die zur Übertragung von Datenpaketen notwendigen IP-Adressen werden von jeweiligen Internet-Service-Providern (ISP) nur dynamisch zugeteilt, weshalb vor der Herstellung einer Verbindung über das Internet zuerst die IP-Adressen ausgetauscht werden müssen. Eine zwischen den Datennetzen angeordnete Firewall ist jedoch in der Regel für das Erkennen von statischen IP-Adressen ausgelegt.
Für jede Verbindung müssen die Port-Nummern der Firewall neu bestimmt werden, da sie nur für die Zeitdauer einer einzelnen Verbindung gelten können. Diese dynamisch bestimmten Port-Nummern bereiten Probleme in der Bearbeitung der Daten durch die Firewall-Einrichtung, die in der Regel auf das Erkennen von statisch bestimmten Port-Nummern ausgerichtet ist. Betreiber und Administratoren von derzeitigen Firewallsystemen dürfen aus Sicherheitsgründen in der Regel keine Änderungen in der Konfiguration vornehmen, um solche Daten durch die Firewall passieren zu lassen, da anderenfalls das Risiko für unberechtigte Zugriffe auf die Kommunikationseinrichtungen steigt. Daher gestaltet sich z.B. eine Multimedia-Konferenz über eine VoIP-Verbindung mit einer zwischengeschalteten Firewall als äußerst problematisch.

Herkömmlicherweise werden bestehende Firewalls durch zusätzliche Einrichtungen erweitert, die Multimediadaten erkennen und durch die Firewall leiten. Dies erfordert aber einen Austausch eines bestehenden Firewall-Systems gegen ein neues, welches wieder komplett konfiguriert werden muß und zudem neue Sicherheitslücken aufweisen kann.

Eine derartige Firewallarchitektur ist z.B. aus der Druckschrift "VDMFA, eine verteilte dynamische Firewallarchitektur für Multimedia-Dienste" von C. Rensing et al. vom März 1999, XP002184608 bekannt.

Der Erfindung liegt die daher Aufgabe zugrunde, ein Verfahren der gattungsgemäßen Art dahingehend weiterzubilden, daß Daten bei einer im Datennetz angeordneten Sicherheitseinrichtung unter Beibehaltung einer bestehenden Sicherheits-Konfiguration durch diese Sicherheitseinrichtung übertragen werden. Desweiteren ist es Aufgabe der Erfindung, eine Proxy zur Durchführung des Verfahrens zur Verfügung zu stellen.

Diese Aufgabe wird verfahrensseitig gemäß den Merkmalen des Patentanspruchs 1 und vorrichtungsseitig gemäß den Merkmalen der Patentansprüche 10 und 11 gelöst.

Ein wesentlicher Punkt der Erfindung liegt darin, daß die Informationsdaten zum Schutz gegen einen unberechtigten Zugriff auf die Kommunikationseinrichtung an die Sicherheitseinrichtung übertragen werden und die Sprach- und/oder Videodaten unter Umgehung der Sicherheits-einrichtung übertragen werden. Ein wesentlicher Vorteil des Verfahrens besteht darin, daß am bestehenden Firewallsystem keine Änderungen in der Konfiguration vorgenommen werden müssen, um alle Daten durch die Firewall passieren zu lassen. Ein weiterer Vorteil des Verfahrens besteht darin, daß die Sprach- und/oder Videodaten keiner Sicherheitsüberprüfung unterzogen werden müssen, wodurch die Firewall von der Analyse dieser Daten entlastet wird. Es erweist sich als äußerst vorteilhaft, daß obwohl ein Großteil der zu den Multimediadaten gehörenden Daten die Firewall umgeht, keine Einschränkungen zum Schutz gegen einen unberechtigten Zugriff auf die Kommunikationseinrichtung in Kauf genommen werden müssen.

In einer bevorzugten Ausführung werden die Informationsdaten von den Sprach- und/oder Videodaten mittels einer innerhalb einer ersten Proxy angeordneten Selektionseinrichtung selektiert. Daraufhin werden nur die Informationsdaten von der ersten Proxy an die Firewall übertragen und dort einer Sicherheitsüberprüfung unterzogen. Dabei wird u. a. überprüft, ob es sich um Daten handelt, die einen unerlaubten Zugriff auf die Kommunikationseinrichtung ermöglichen oder ob es sich bei den Daten eventuell um Computerviren handelt. Die sicherheitsüberprüften Daten werden dann an eine innerhalb einer zweiten Proxy angeordneten Zusammenführeinrichtung übertragen. Die Sprach- und/oder Videodaten werden hingegen von der ersten Proxy direkt an die Zusammenführeinrichtung übertragen. Daraufhin werden die Daten wieder zu den ursprünglichen Multimediadaten zusammengeführt. Zur Ausführung dieser Zusammenführung wird auf Daten zurückgegriffen, die in einem Zusatzfeld (Header) der einzelnen Datenpakete enthalten sind. In den Headern sind allgemeine Protokolldaten enthalten, mittels deren die ursprüngliche Reihenfolge der Daten generiert werden kann. Die Daten werden nach der Zusammenführung an die Kommunikationseinrichtung übertragen.

In einer bevorzugten Ausführung ist das Datennetz als Kommunikationssystem nach dem Standard H.323 zur Übertragung von VoIP-Daten aufgebaut. Der H.323-Standard gibt den Standard für Echtzeitkommunikation an und beschreibt den Transport von Daten über IP-basierende Netzwerke. In einer weiteren Ausführung ist das Datennetz als Multimedia-Kommunika-tionssystem nach einem SIP-Standard aufgebaut.
Vorzugsweise werden die Daten nach einem Real-Time-Proto-col (RTP) Verfahren auf mehrere IP-Pakete verteilt. Diesen Paketen werden in den Headern zusätzliche Zeitstempel (Time Stamp) mit der Entstehungszeit sowie Folgenummern (Sequence Information) miteingebunden. Dies erlaubt der Empfängereinrichtung Pakete nicht nur in richtiger Reihenfolge sondern auch zeitsynchron zusammenzusetzen. Außerdem definiert RTP die Kodierung von Audio-, Video- und Daten nach mehreren Codecs. Hierbei handelt es sich um Kodierungs- und Dekodierungsverfahren, die von der ITU zur analogen und digitalen Verschlüsselung von Audio-, Video- und Daten in Telefonnetzen definiert wurden.

In einer bevorzugten Ausführung werden zur Absicherung der Datenkanäle zwischen den Proxys und der Firewall auf authentisierte Kanäle zurückgegriffen, um auch diese letzten "Schlupflöcher" für potentielle Hackerangriffe zu schließen. Auf authentisierte Kanäle haben ausschließlich berechtigte Teilnehmer Zugriff.
Alternativ kann zur Absicherung auch auf eine Verschlüsselung der Informationsdaten zurückgegriffen werden.

Um mögliche. "Angriffe" der Proxys mittels beispielsweise File-Transfer-Protocol (FTP), Telnet oder Ping auszuschließen, werden die Proxys mit einer IP-Paketfilter-Funktionalität ausgebildet. Ein Paketfilter auf IP-Ebene läßt nur IP-Datenpakete passieren, die bestimmten vordefinierten Kriterien genügen. Dazu kann z.B. die Richtung, die Absenderadresse, die Empfängeradresse, der Quellport, der Zielport, usw., gehören.

Weitere vorteilhafte Ausführungsformen ergeben sich aus den Unteransprüchen sowie der nachfolgenden Beschreibung der bevorzugten Ausführungsbeispiele, die anhand der Abbildungen näher erläutert werden. Hierbei zeigen:
- Fig. 1: ein Beispiel eines Sicherheitssystems in einer Ausführungsform der Erfindung,
- Fig. 2: ein Beispiel einer ersten Proxy, und
- Fig. 3: ein Beispiel einer zweiten Proxy.

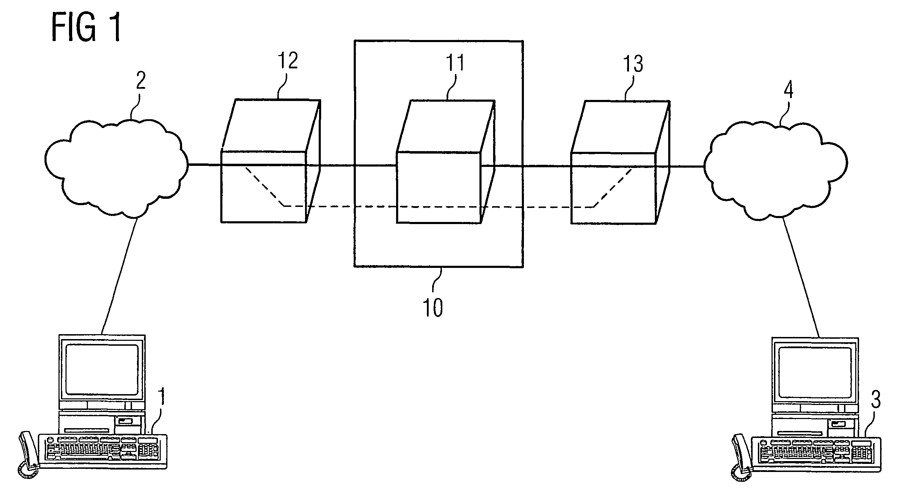

In Fig. 1 ist ein Beispiel eines Sicherheitssystems in einer Ausführungsform der Erfindung dargestellt. In diesem Ausführungsbeispiel möchte ein Teilnehmer über eine erste Kommunikationseinrichtung 1 die mit einem öffentlichen Datennetz 2, beispielsweise dem Internet, verbunden ist, einen Verbindungsaufbau zu einer zweiten Kommunikationseinrichtung 3, die mit einem lokalen Datennetz 4 verbunden ist, aufbauen. Bei der Verbindung werden beispielsweise Multimediadaten, bestehend aus Sprach- und/oder Videodaten und dazugehörenden Informationsdaten, übertragen. Die Netzinfrastruktur basiert auf einem Internetprotokoll, beispielsweise nach einem H.323-Standard oder einem SIP-Standard. Das lokale Datennetz 4 ist über ein Sicherheitssystem 10, bestehend aus einer Sicherheitseinrichtung 11, insbesondere einer Firewall, einer ersten Proxy 12 und einer zweiten Proxy 13 mit dem öffentlichen Datennetz 2 verbunden. Die erste Proxy 12 ist dabei, von der zweiten Kommunikationseinrichtung 3 aus betrachtet, hinter der Sicherheitseinrichtung 11 und die zweite Proxy 13 vor der Sicherheitseinrichtung angeordnet.

Ein von dem öffentlichen Datennetz 2 an die zweite Kommunikationseinrichtung 3 gerichteter Multimedia-Datenstrom wird in der ersten Proxy 12 dahingehend gefiltert, daß Informationsdaten von Sprach- und/oder Videodaten selektiert werden. Anschließend werden nur die Informationsdaten an die Sicherheitseinrichtung 11 gesendet.
Die innerhalb der Sicherheitseinrichtung 11 durchgeführte Sicherheitsüberprüfung der Informationsdaten wird hardwarebasiert mittels eines Prozessors, insbesondere eines DigitalSignal-Processors (DSP), durchgeführt. In einer weiteren Ausführungsform wird die Sicherheitsüberprüfung auch mittels eines auf einem Prozessor ausgeführten Algorithmus durchgeführt. Ein Vorteil dieser softwarebasierten Sicherheitsüberprüfung liegt darin, daß ständig aktualisierte Programme, insbesondere Virenschutzprogramme, in einer Datenbank gespeichert werden können, auf die der Prozessor Zugriff hat. Somit können auch aktuelle Viren erkannt und herausgefiltert werden.

Die Sprach- und/oder Videodaten werden unter Umgehung der Sicherheitseinrichtung 11 an die zweite Proxy 13 übertragen. Die sicherheitsüberprüften Informationsdaten werden von der Sicherheitseinrichtung 11 ebenfalls an die zweite Proxy 13 übertragen und daraufhin mit den Sprach- und/oder Videodaten zusammengeführt, so daß am Ausgang der zweiten Proxy 13 wieder der ursprüngliche Multimedia-Datenstrom anliegt, der daraufhin über das lokale Datennetz 4 an die zweite Kommunikationseinrichtung 3 übertragen wird.

Somit sind die Kommunikationseinrichtungen 1 und 3 weiterhin in der Lage, eine gegenseitige VoIP-Verbindung problemlos und transparent aufzubauen. Wird also von der ersten Kommunikationseinrichtung 1 eine Verbindung zu der zweiten Kommunikationseinrichtung 3 gewünscht, so erkennt das erste Proxy 12 anhand des Internet-Protokolls (z. B. H.323 oder SIP), daß es sich um einen Verbindungsaufbauwunsch handelt. Die dafür benötigten Daten werden über einen explizit vorher freigeschalteten Port an die Sicherheitseinrichtung 11 geleitet. Die zweite Proxy 13 leitet die Sprach- und/oder Videodaten wieder mit dem bisherigen IP-Datenstrom in das lokale Datennetz 4 ein. Dabei hält die zweite Proxy 13 die Kommunikationsdaten gespeichert, so daß die zweite Proxy 13 bei der Antwort zum Verbindungsaufbau von der zweiten Kommunikationseinrichtung 3 zu der ersten Kommunikationseinrichtung 1 die Sprach- und/oder Videodaten sofort erkennt und ebenfalls über einen festgelegten Port an der Sicherheitseinrichtung 11 aus dem lokalen Datennetz 4 herausleiten kann.

Ähnlich würde es sich verhalten, wenn über die zweite Kommunikationseinrichtung 3 eine Verbindung zu der ersten Kommunikationseinrichtung 1 aufgebaut wird. Die zweite Proxy 13 würde diesen Verbindungsaufbau wiedererkennen und die erste Proxy 12 würde die entsprechende Funktion für einen reibungslosen Verbindungsaufbau zu der ersten Kommunikationseinrichtung 1 übernehmen.

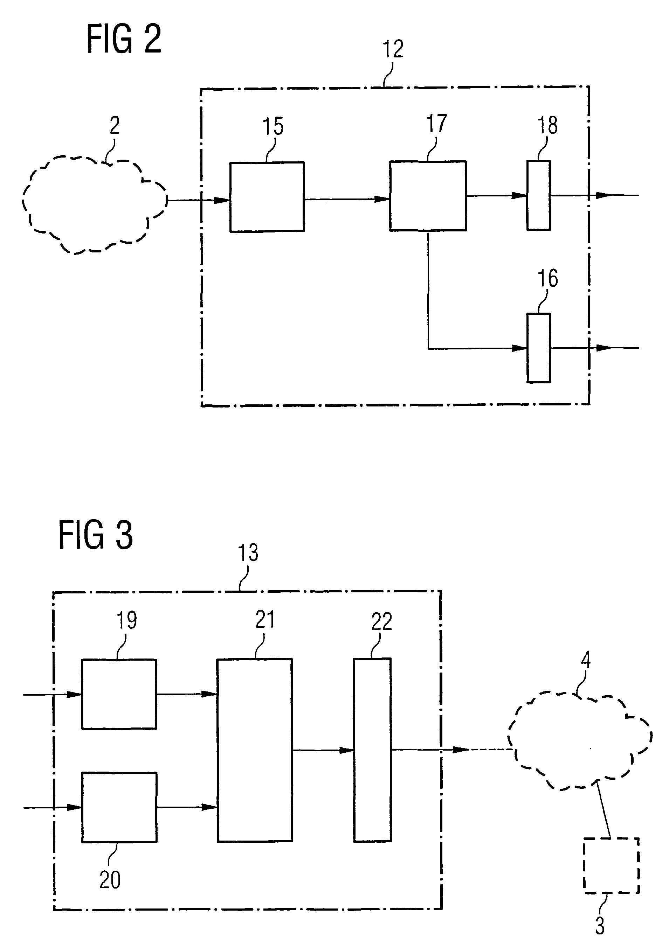

In Fig. 2 ist ein Ausführungsbeispiel der ersten Proxy 12 in einer Ausführungsform der Erfindung dargestellt. Die aus dem öffentlichen Datennetz 2 stammenden Datenpakete werden an eine innerhalb der ersten Proxy 12 angeordneten Empfangseinrichtung 15 übertragen und an eine Selektionseinrichtung 17 weiterübermittelt. Diese Einrichtung selektiert die innerhalb der Daten enthaltenen Informationsdaten von den Sprach- und/oder Videodaten und überträgt die Informationsdaten an die erste Sendeeinrichtung 16 und die Sprach- und/oder Videodaten an eine zweite Sendeeinrichtung 18. Die erste Sendeeinrichtung 16 überträgt die Informationsdaten an die Firewall 11, die zweite Sendeeinrichtung 18 überträgt die Sprach- und/oder Videodaten unter Umgehung der Firewall 11 an die zweite Proxy 13.

In Fig. 3 ist ein Beispiel einer zweiten Proxy 13 in einer Ausführungsform der Erfindung dargestellt. Die von der Firewall 11 empfangenen sicherheitsüberprüften Informationsdaten werden von einer ersten Empfangseinrichtung 19 und die von dem ersten Proxy 12 übertragenen Sprach- und/oder Videodaten werden von einer zweiten Empfangseinrichtung 20 empfangen und an eine innerhalb der zweiten Proxy 13 angeordneten Zusammenführeinrichtung 21 übertragen. Diese Einrichtung führt dabei die Sprach- und/oder Videodaten und die Informationsdaten zu dem ursprünglichen Multimedia-Datenstrom zusammen. Dabei wird anhand der in den Headern der IP-Pakete enthaltenen Zusatzinformationen die richtige Reihenfolge der Pakete generiert. Die Daten werden anschließend von einer dritten Sendeeinrichtung 22 in das lokale Datennetz 4 übertragen und gelangen darüber an die zweite Kommunikationseinrichtung 3.

Die Ausführung der Erfindung ist nicht auf die beschriebenen Beispiele und oben hervorgehobenen Aspekte beschränkt, sondern im Rahmen der Ansprüche ebenfalls in einer Vielzahl von Abwandlungen möglich, die im Rahmen fachgemäßen Handelns liegen.

## Patentansprüche

1. Verfahren zur paketorientierten Übertragung von Daten, bestehend aus Sprach- und/oder Videodaten und dazugehörenden Informationsdaten, zwischen mindestens zwei Kommunikationseinrichtungen (1, 3) die über ein Datennetz (2, 4) miteinander verbunden sind, wobei
die Informationsdaten zum Schutz gegen einen unberechtigten Zugriff auf die Kommunikationseinrichtung (3) an eine Sicherheitseinrichtung (11) übertragen werden und die Sprach- und/oder Videodaten unter Umgehung der Sicherheitseinrichtung (11) übertragen werden
**dadurch gekennzeichnet, daß**
mittels einer innerhalb einer ersten Proxy (12) angeordneten Selektionseinrichtung (17) die Informationsdaten von den Sprach- und/oder Videodaten selektiert werden,
die Informationsdaten von der ersten Proxy (12) an die Sicherheitseinrichtung (11) übertragen werden, dort eine Sicherheitsüberprüfung der Daten durchgeführt wird und die sicherheitsüberprüften Daten an eine innerhalb einer zweiten Proxy (13) angeordnete Zusammenführeinrichtung (21) übertragen werden,
die Sprach- und/oder Videodaten von der ersten Proxy (12) direkt an die Zusammenführeinrichtung (21) übertragen werden, die Sprach- und/oder Videodaten und die Informationsdaten innerhalb der Zusammenführeinrichtung (21) zu den ursprünglichen Daten zusammengeführt werden, und
die Daten an die zweite Kommunikationseinrichtung (3) übertragen werden.

2. Verfahren nach Anspruch 1,
**dadurch gekennzeichnet, daß**
das Datennetz (2, 4) als Kommunikationssystem nach dem Standard H.323 zur Übertragung von VoIP-Daten aufgebaut und die Sicherheitseinrichtung (11) als Firewall ausgebildet ist.

3. Verfahren nach einem der Ansprüche 1 bis 2,
**dadurch gekennzeichnet, daß**
das Datennetz (2, 4) als Multimedia-Kommunikationssystem nach dem SIP-Standard aufgebaut ist.

4. Verfahren nach einem der vorangegangenen Ansprüche,
**dadurch gekennzeichnet, daß**
die Daten nach einem RTP-Standard aufgebaut sind.

5. Verfahren nach einem der vorangegangenen Ansprüche,
**dadurch gekennzeichnet, daß**
mindestens ein zwischen der Sicherheitseinrichtung (11) und den Proxys (12, 13) angeordneter Datenkanal zum Schutz gegen einen unberechtigten Zugriff als authentisierter Kanal, der ausschließlich von berechtigten Teilnehmern benutzt wird, ausgebildet ist.

6. Verfahren nach einem der vorangegangenen Ansprüche,
**dadurch gekennzeichnet, daß**
die zwischen der Sicherheitseinrichtung (11) und den Proxys (12, 13) übertragenen Informationsdaten, zum Schutz gegen einen unberechtigten Zugriff, verschlüsselt übertragen werden.

7. Verfahren nach einem der vorangegangenen Ansprüche,
**dadurch gekennzeichnet, daß**
die Proxys (12, 13) zum Schutz gegen einen unberechtigten Zugriff mit einer Paketfilter-Funktionalität ausgebildet sind.

8. Proxy zur Durchführung des Verfahrens nach einem der vorangegangenen Ansprüche,
**gekennzeichnet durch**
eine erste Empfangseinrichtung (15) zum Empfangen der aus dem Datennetz (2) empfangenen Daten,
eine mit der ersten Empfangseinrichtung (15) verbundene Selektionseinrichtung (17) zur Selektion der Informationsdaten von den Sprach- und/oder Videodaten,
eine erste Sendeeinrichtung (16) zur Übertragung der Informationsdaten an die Sicherheitseinrichtung (11), und
eine zweite Sendeeinrichtung (18) zur Übertragung der Sprach- und/oder Videodaten an die zweite Proxy (13).

9. Proxy zur Durchführung des Verfahrens nach einem der Ansprüche 1 bis 7,
**gekennzeichnet durch**
eine zweite Empfangseinrichtung (19) zum Empfangen der von der Sicherheitseinrichtung (11) übertragenen sicherheitsüberprüften Informationsdaten und eine dritte Empfangseinrichtung (20) zum Empfangen der von der ersten Proxy (12) übertragenen Sprach- und/oder Videodaten,
eine mit der zweiten Empfangseinrichtung (19) und der dritten Empfangseinrichtung (20) verbundene Zusammenführeinrichtung (21) zum Zusammenführen der Daten zu den ursprünglichen Daten, und
eine dritte Sendeeinrichtung (22) zur Übertragung der zusammengesetzten Daten an die Kommunikationseinrichtung (1, 3).

## Claims

1. Method for packet oriented transmission of data, consisting of voice and/or video data and associated information data, between at least two communication devices (1, 3) which are connected to each other over a data network (2, 4),
in which,
the information data for protecting against unauthorized access to the communication device (3) is transmitted to a security device (11) and the voice and/or video data is transmitted bypassing the security device (11).
**characterized in that**,
using a selection device (17) arranged within a first proxy (12) the information data is selected from the voice and/or video data.
the information data is transmitted from the first proxy (12) to the security device (11) a security check is made on the data there and the security-checked data is transmitted to an assembly device (21) arranged within a second proxy (13),
the voice and/or video data is transmitted directly from the first proxy (12) to the assembly device (21), the voice and/or video data and the information data is reassembled within the assembly device (21) into the original data and the data is transmitted to the second communication device (3).

2. Method in accordance with claim 1,
**characterized in that**,
the data network (2, 4) is set up as a communication system in accordance with the H.323 standard for transmission of VoIP data and the security device (11) is embodied as a firewall.

3. Method in accordance with one of the Claims 1 to 2,
**characterized in that**,
the data network (2, 4) is set up as a multimedia communication system in accordance with the SIP standard.

4. Method in accordance with one of the previous claims, **characterized in that** the data is constructed in accordance with an RTP standard.

5. Method in accordance with one of the previous claims,
**characterized in that**,
at least one data channel between the security device (11) and the proxies (12, 13) is embodied as an authenticated channel for exclusive use by authorized subscribers in order to protect against unauthorized access.

6. Method in accordance with one of the previous claims,
**characterized in that**,
the information data transmitted between the security device (11) and the proxies (12, 13) is transmitted encrypted for protection against unauthorized access.

7. Method in accordance with one of the previous claims,
**characterized in that**,
the proxies (12, 13) are embodied with a packet filter functionality to protect against unauthorized access.

8. Proxy for executing the method in accordance with one of the previous claims,
**characterized by**
a first receive device (15) for receiving the data from a public data network (2), a selection device (17) connected to the first receive device (15) for selecting the information data from the voice and/or video data,
a first send device (16) for transmitting the information data to the security device (11), and
a second send device (18) for transmitting the voice and/or video data to the proxy (13).

9. Proxy for executing the method in accordance with one of the Claims 1 to 7,
**characterized by**
a second receive device (19) to receive the security-checked information data from the security device (11) and a third receive device (20) to receive the voice and/or video data received from the proxy (12),
an assembly device (21) linked to the second receive device (19) and the third receive device (20) for assembling the data for the original data and
a third send device (22) for transmitting the assembled data to the communication device (1, 3).

## Revendications

1. Procédé pour la transmission de données orientée paquet, comprenant des données audio et/ou vidéo et des données d'information associées, entre au moins deux dispositifs de communication (1, 3) qui sont reliés entre eux par un réseau de données (2, 4),
les données d'information étant transmises à un dispositif de sécurité (11) pour la protection contre un accès illicite au dispositif de communication (3) et les données audio et/ou vidéo étant transmises en contournant le dispositif de sécurité (11),
**caractérisé en ce que**
les données d'information sont sélectionnées parmi les données audio et/ou vidéo au moyen d'un dispositif de sélection (17) disposé à l'intérieur d'un premier Proxy (12),
les données d'information sont transmises du premier Proxy (12) au dispositif de sécurité (11), un contrôle de sécurité des données est effectué à cet endroit et les données contrôlées au niveau de la sécurité sont transmises à un dispositif de regroupement (21) disposé à l'intérieur d'un second Proxy (13),
les données audio et/ou vidéo sont transmises du premier Proxy (12) directement au dispositif de regroupement (21),
les données audio et/ou vidéo et les données d'information sont regroupées à l'intérieur du dispositif de regroupement (21) en données initiales, et
les données sont transmises au second dispositif de communication (3).

2. Procédé selon la revendication 1,
**caractérisé en ce que**
le réseau de données (2, 4) est conçu comme système de communication selon le standard H.323 pour la transmission de données VoIP et le dispositif de sécurité (11) comme un pare-feu.

3. Procédé selon l'une quelconque des revendications 1 à 2,
**caractérisé en ce que**
le réseau de données (2, 4) est conçu comme un système de communication multimédia selon le standard SIP.

4. Procédé selon l'une quelconque des revendications précédentes,
**caractérisé en ce que**
les données sont établies selon un standard RTP.

5. Procédé selon l'une quelconque des revendications précédentes,
**caractérisé en ce que**
au moins un canal de données disposé entre le dispositif de sécurité (11) et les Proxys (12, 13) est conçu pour la protection contre un accès illicite sous la forme de canal authentifié qui est utilisé exclusivement par des abonnés autorisés.

6. Procédé selon l'une quelconque des revendications précédentes,
**caractérisé en ce que**
les données d'information transmises entre le dispositif de sécurité (11) et les Proxys (12, 13) sont transmises de façon codée pour la protection contre un accès illicite.

7. Procédé selon l'une quelconque des revendications précédentes,
**caractérisé en ce que**
les Proxys (12, 13) sont conçus avec une fonctionnalité de filtre de paquet pour la protection contre un accès illicite.

8. Proxy pour la mise en oeuvre du procédé selon l'une quelconque des revendications précédentes,
**caractérisé par**
un premier dispositif de réception (15) pour la réception des données reçues du réseau de données (2),
un dispositif de sélection (17) relié au premier dispositif de réception (15) pour la sélection des données d'information parmi les données audio et/ou vidéo,
un premier dispositif d'émission (16) pour la transmission des données d'information au dispositif de sécurité (11), et
un second dispositif d'émission (18) pour la transmission des données audio et/ou vidéo au second Proxy (13).

9. Proxy pour la mise en oeuvre du procédé selon l'une quelconque des revendications 1 à 7,
**caractérisé par**
un second dispositif de réception (19) pour la réception des données d'information contrôlées au niveau de la sécurité et transmises par le dispositif de sécurité (11) et un troisième dispositif de réception (20) pour la réception des données audio et/ou vidéo transmises par le premier Proxy (12),
un dispositif de regroupement (21) relié au second dispositif de réception (19) et au troisième dispositif de réception (20) pour le regroupement des données en données initiales, et
un troisième dispositif d'émission (22) pour la transmission des données assemblées au dispositif de communication (1, 3).
